# FASCICULE DE BREVET EUROPEEN

(11) **EP 1 456 002 B1**
(45) Date de publication et mention de la délivrance du brevet: **21.06.2006**
(21) Numéro de dépôt: 02801139.3
(22) Date de dépôt: 17.12.2002
(51) Int. Cl.: B29C 45/73, B29D 11/00

(54) **DEMI-BLOC DE MOULE POUR LE MOULAGE PAR INJECTION D'UN ELEMENT OPTIQUE EN MATIERE THERMOPLASTIQUE ET MOULE COMPORTANT UN TEL DEMI-BLOC**
WERKZEUGBLOCKHÄLFTE FÜR DAS SPRITZGIESSEN EINES THERMOPLASTISCHEN OPTISCHEN ELEMENTS UND EINE SOLCHE BLOCKHÄLFTE UMFASSENDES WERKZEUG
MOULD HALF-BLOCK FOR THE INJECTION MOULDING OF A THERMOPLASTIC OPTICAL ELEMENT AND THE MOULD COMPRISING ONE SUCH HALF-BLOCK

(30) Priorité: 17.12.2001 US 15586
(43) Date de publication de la demande: 15.09.2004
(73) Titulaire: ESSILOR INTERNATIONAL (Compagnie Générale d'Optique), 94227 Charenton le Pont (FR)
(72) Inventeur: CHIU, Hao-Wen, 207 Clearwater, FL 33756 (US); YANG, Hsinjin, Palm Harbor, FL 34685 (US)
(74) Mandataire: Santarelli
(86) Numéro de dépôt international: PCT/FR2002/004385
(87) Numéro de publication internationale: WO 2003/051605

(56) Documents cités:
- GB-A- 2 027 386
- US-A- 6 156 242

## Description

La présente invention se rapporte à la fabrication d'éléments optiques en matière synthétique thermoplastique, tels que des lentilles ophtalmiques, des lentilles d'instruments ou des éléments d'optique de précision, obtenus par moulage-injection.

Le moulage de lentilles ophtalmiques en matière synthétique thermoplastique se fait le plus souvent par injection, ce procédé permettant la transformation directe de la matière plastique brute en lentilles finies (hors revêtements). On sait que, dans la fabrication de lentilles optiques par un procédé de ce genre, la matière thermoplastique est préalablement chauffée pour être fondue à une température supérieure au point de transition vitreuse. Sous cette forme, la matière est introduite sous forte pression dans une cavité de moulage, de forme et dimensions appropriées, ménagée dans un moule. On laisse ensuite la matière se refroidir pour sa solidification, avant de sortir la lentille ainsi formée du moule. Habituellement, on utilise comme matière une résine thermoplastique, telle que du polymétacrylate de méthyle, du polycarbonate ou copolymère de polycarbonate, du polynorbornène, du polystyrène, d'une polyolefine cyclique ou un de ses copolymères, etc.

Pour obtenir des lentilles ophtalmiques possédant les qualités optiques répondant à leur destination, certaines précautions doivent être prises au cours de la fabrication, spécialement pour éviter les déformations irrégulières ou la présence de tensions internes résiduelles. Ces déformations ou tensions sont en effet à l'origine d'une anisotropie ou d'autres aberrations optiques indésirables telles qu'une double réfraction.

A cet égard, on prend des soins particuliers pour la réalisation de la paroi de la cavité de moulage dans le moule. Le plus souvent, le moule se compose de deux demi-blocs dans chacun desquels est ménagée au moins une empreinte de moulage associée à une empreinte correspondante ménagée en regard dans l'autre bloc. Ces deux demi-blocs sont mobiles l'un par rapport à l'autre entre une configuration d'ouverture dégageant un accès direct aux empreintes et une configuration de fermeture dans laquelle les deux demi-blocs sont en contact par des faces de jonction suivant un plan de joint transversal et dans laquelle les empreintes se complètent par paire(s) pour former la ou les cavités de moulage souhaitée(s).

Chaque empreinte de moulage est délimitée transversalement par une coquille de moulage interchangeable qui présente une face utile de moulage possédant les dimensions et courbures appropriées, correspondant (moyennant un certain facteur de retrait) à celles que l'on entend donner à la lentille finie. Ces coquilles sont par exemple en acier inoxydable, alliage à base de nickel ou verre minéral et présentent un poli optique, c'est-à-dire analogue à celui d'un miroir.

En outre, il est souvent préconisé de procéder à l'injection de matière dans l'empreinte en deux phases successives : une première phase de remplissage proprement dit pendant laquelle l'empreinte se remplit progressivement et une seconde phase de bourrage ou compression intervenant après remplissage complet de l'empreinte. Cette seconde phase de bourrage ou compression consiste à soumettre la matière ainsi introduite dans l'empreinte à une pression élevée pendant un temps donné et a pour but d'éliminer les retassures, d'assurer une densité correcte de la matière et de réduire dans une certaine mesure les tensions internes nuisibles. Lorsque cette pression de maintien est engendrée par la machine d'injection elle-même, on parle de bourrage. Lorsqu'elle résulte d'un rapprochement des coquilles de moulage, on parle de compression.

Quoi qu'il en soit, à ces précautions visant l'outillage et le mode opératoire, il convient d'ajouter celles visant le chauffage de la matière plastique et du moule pendant le moulage. Il s'avère en effet primordial d'être en mesure de maîtriser la température de la cavité de moulage et de sa paroi, notamment la température de la face utile de la coquille, pendant toutes les étapes du moulage, et cela selon un gradient de température défini dans le temps et dans l'espace. A cet effet, ordinairement, les demi-blocs du moule sont munis de moyens de transfert thermique, de préférence ambivalents (i. e. aptes à exercer à la fois des fonctions de chauffage et de refroidissement) pour réguler la température du moule autour de la cavité de moulage d'un cycle à l'autre, et pour accélérer l'évacuation des calories de la lentille moulée. Il peut s'agir par exemple de canaux de circulation d'un fluide caloporteur. La chaleur fournie ou extraite par la circulation du fluide chaud ou des résistances électriques se répand dans la masse des demi-blocs et, par conductivité thermique, dans celle des coquilles et se communique par les faces utiles de celles-ci dans la cavité de moulage et, partant, à la matière plastique en cours de sa mise en forme.

Ce mode de chauffage/refroidissement présente en pratique des inconvénients, notamment du fait de l'importance de l'inertie thermique des demi-blocs. On constate en particulier un manque de précision aussi bien en ce qui concerne la répartition de température dans le moule, autour de la cavité de moulage, que la variation de cette température au cours du temps. Tout d'abord, il n'assure pas le chauffage de la matière plastique de la façon régulière et uniforme qui serait souhaitable pour éviter les tensions internes. Les différentes parties du moule, et plus spécifiquement de la paroi de la cavité de moulage, ne parviennent que progressivement et inégalement à la température requise pour chacune des différentes phases du moulage. Ce manque d'uniformité de transmission de la chaleur se retrouve également au refroidissement après injection. De plus, et surtout, l'évolution de la température de la paroi de la cavité de moulage au cours des différentes phases du moulage n'est pas contrôlée de manière suffisamment précise, ce qui risque d'induire les défauts optiques importants évoqués précédemment ou oblige à augmenter dans des proportions inadmissibles les temps de cycles. Il résulte de cette inégalité de chauffage et de refroidissement en différents points de la matière moulée, et de l'imprécision du gradient de température dans le temps, que la lentille optique obtenue conserve des déformations et tensions qui sont susceptibles de la rendre impropre aux utilisations optiques auxquelles elle est destinée.

Pour améliorer la précision de contrôle du gradient de température, il a été conçu des moules dans lesquels les coquilles elles-mêmes sont munies de moyens intrinsèques et ambivalents de transfert thermique tels que des canaux de circulation de fluide caloporteur. Une telle intégration de moyens de transfert thermique ambivalents dans les parties principales du moule que constituent les coquilles permet d'assurer aussi bien le chauffage que le refroidissement de la majeure partie de la paroi de la cavité de moulage suivant une loi de régulation thermique optimisée, sans qu'il soit nécessaire de déplacer le moule pour le soumettre à l'action de moyens de chauffage et/ou de refroidissement externes. Toutefois, selon les dispositions usuelles de ce type, les coquilles prévues pour recevoir les moyens de chauffage et de refroidissement, sont fixées sur le demi-bloc concerné et c'est en considération de cet agencement que sont ménagés des raccords avec les alimentations en fluide chauffant ou en courant électrique. Avec des installations de ce genre, les opérations de montage et de démontage des coquilles sont longues et compliquées.

Afin d'éviter ces complications tout en conservant les avantages résultant de l'action directe des moyens de transfert thermique sur les coquilles, on a proposé de réaliser la coquille en deux parties :
- une embase recevant la totalité des moyens de transfert thermique de ladite coquille et
- un insert amovible rapporté sur l'embase et portant la face de moulage, cet insert étant dépourvu de tout moyen intrinsèque de transfert thermique et étant exclusivement régulé thermiquement par transfert thermique avec ladite embase.

L'insert est ainsi interchangeable et peut de ce fait être choisi parmi un jeu préétabli ou même fabriqué à la demande en fonction de la définition de surface souhaitée pour la lentille. Le montage/démontage de l'insert sur l'embase est donc aisé et rapide puisqu'il est exempt de tout raccordement hydraulique ou électrique, tant avec la source de régulation thermique qu'avec l'embase, Le raccordement à la source de régulation thermique s'opère via l'embase et ne doit donc pas être démonté.

Ce mode de réalisation, intéressant en ce qu'il combine, au moins en théorie, l'avantage d'une action thermique directe sur la coquille avec une commodité d'interchangeabilité de l'insert, se révèle toutefois perfectible quant à l'efficacité et à la précision de la régulation thermique qu'il permet.

On connaît déjà par GB-A-2 027 388 un tel insert qui est en forme de chapeau et coiffe un tampon fait dans une matière à conductivité thermique plus faible que celle de l'insert, ce tampon étant prévu pour retirer la chaleur moins rapidement des parties centrales de la face utile de l'insert que de ses faces périphériques, la chaleur étant évacuée du centre de la face utile par l'intermédiaire du tampon vers un bloc transfert thermique appartenant à l'embase.

Selon l'invention, on propose un demi-bloc de moule pour le moulage par injection d'un élément optique tel qu'une lentille ophtalmique en matière thermoplastique, possédant au moins une empreinte de moulage délimitée transversalement par la face utile d'une coquille pourvue de moyens intrinsèques et ambivalents de transfert thermique (chauffage et refroidissement), cette coquille comportant une embase recevant la totalité des moyens de transfert thermique de ladite coquille et un insert amovible rapporté sur l'embase et portant la face utile, ledit insert étant dépourvu de tout moyen intrinsèque de transfert thermique et étant exclusivement régulé thermiquement par transfert thermique avec ladite embase. L'insert, en forme de chapeau, coiffe une partie de tête au moins de l'embase et les moyens de transfert thermique de l'embase affectent cette partie de tête de l'embase coiffée par l'insert.

Un tel agencement permet d'améliorer l'efficacité et la précision des échanges thermiques entre les moyens de transfert thermique et l'insert, via l'embase. On comprend en effet que, tout d'abord, la forme de chapeau de l'insert et l'emboîtement de la partie de tête de l'embase dans cet insert augmentent en soi la surface d'échange de cet insert avec l'embase. De plus et surtout, dans ce contexte, l'emplacement des moyens de transfert thermiques en tête d'embase revient, du point de vue de l'efficacité du transfert thermique, à disposer ces moyens de transfert thermique en quelque sorte « dans » l'insert, la partie de tête de l'embase, seule affectée par le transfert thermique, se trouvant « enveloppée » dans l'insert-chapeau.

Selon une caractéristique avantageuse de l'invention, la coquille est reçue dans une chemise qui présente une face interne cylindrique délimitant latéralement l'empreinte en complément de la face utile de la coquille et qui est, elle aussi, pourvue de moyens intrinsèques et ambivalents de transfert thermique. L'enveloppement des coquilles dans une chemise auto-modulée thermiquement permet d'améliorer la qualité et notamment la précision de régulation du gradient de température du moule tout autour de la cavité de moulage et, partant, de la matière thermoplastique. La chemise exerce ainsi une fonction de ceinturage thermique qui s'ajoute éventuellement à sa fonction de guide mécanique des deux coquilles l'une par rapport à l'autre lorsque l'on souhaite réaliser une compression en fin d'injection.

Avantageusement alors, les moyens intrinsèques et ambivalents de transfert thermique de la chemise sont indépendants de ceux de la coquille.

Dans un mode de réalisation préféré, les moyens intrinsèques et ambivalents de transfert thermique de la coquille et de la chemise comportent un circuit interne de circulation d'un fluide caloporteur.

D'autres caractéristiques et avantages de l'invention apparaîtront à la lecture de la description qui suit d'un mode de réalisation particulier donné à titre d'exemple non limitatif.

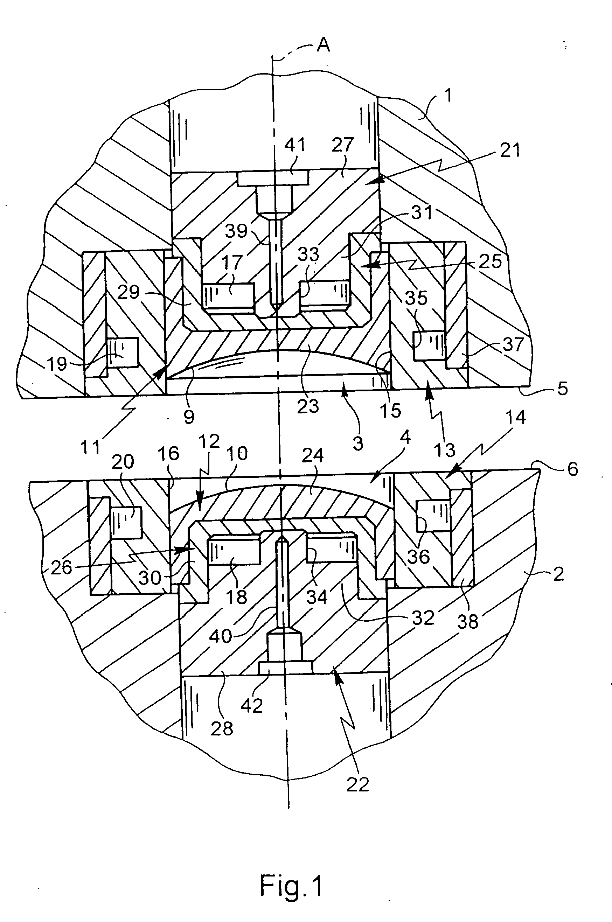

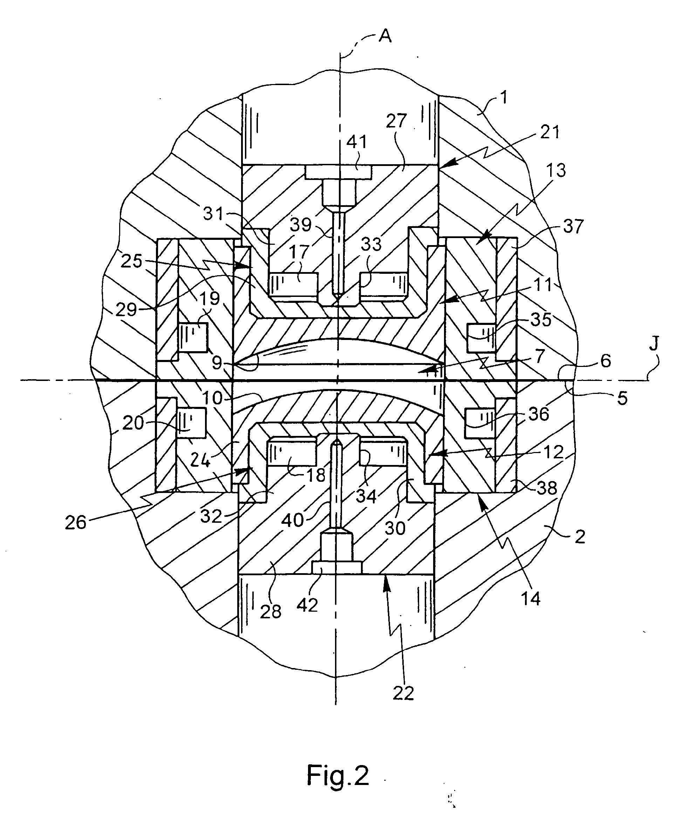

Il sera fait référence aux dessins présentés en annexe, où les figures 1 et 2 sont des vues partielles de la zone contenant la cavité de moulage d'un moule conforme à l'invention, en coupe par un plan contenant l'axe de la cavité de moulage, respectivement en configurations d'ouverture et de fermeture.

En référence aux figures, un moule conforme à l'invention pour le moulage par injection d'un élément optique en matière thermoplastique, et en particulier d'une lentille ophtalmique, comporte deux demi-blocs 1, 2, possédant chacun respectivement au moins une empreinte de moulage 3, 4 de contour cylindrique d'axe A.

Les deux demi-blocs 1, 2 sont mobiles l'un par rapport à l'autre, selon par exemple un mouvement de translation suivant l'axe A, entre une configuration d'ouverture dégageant un accès direct aux empreintes 3, 4 et une configuration de fermeture dans laquelle les deux demi-blocs 1, 2 sont en contact par des faces de jonction 5, 6 suivant un plan de joint transversal noté J sur la figure 2 et dans laquelle les empreintes 3, 4 se complètent pour former la cavité de moulage 7 souhaitée.

En pratique, chaque demi-bloc 1, 2 comporte de préférence plusieurs empreintes de moulage telles que 3, 4 et, en configuration de fermeture, ces empreintes se complètent par paire pour former plusieurs cavités de moulage telles que 7 permettant le moulage simultané, avec le même moule, de plusieurs lentilles.

Chaque empreinte 3, 4 est délimitée transversalement par la face utile 9, 10 d'une coquille 11, 12. Dans l'exemple illustré aux figures, la face utile 9 de la coquille supérieure 11 est concave, tandis que la face utile 10 de la coquille inférieure 12 est convexe.

Chaque coquille 11, 12 est reçue dans une chemise tubulaire 13, 14 d'axe A qui présente une face interne cylindrique 15, 16 d'axe A délimitant latéralement l'empreinte 3, 4 en complément de la face utile 9, 10 de la coquille 11, 12. Les faces 9, 10, 15, 16 forment ainsi la paroi des empreintes 3, 4 et donc de la cavité de moulage 7.

Chaque coquille 11, 12 et la chemise 13, 14 qui lui est associée sont pourvues de moyens intrinsèques et ambivalents de transfert thermique. Par « ambivalents », on entend des moyens aptes à assurer aussi bien le chauffage que le refroidissement de la coquille 11, 12 et de sa chemise 13, 14. Par « intrinsèques », on entend des moyens qui ne sont pas d'origine extérieure mais qui affectent directement, dans leur constitution, chaque coquille 11, 12 et chaque chemise 13, 14.

Plus précisément, en l'espèce, ces moyens intrinsèques et ambivalents de transfert thermique de la coquille 11, 12 et de la chemise 13, 14 sont réalisés sous la forme de circuits internes de circulation d'un fluide caloporteur. On distingue ainsi un circuit 17, 18 pour chaque coquille 11, 12 et un circuit 19, 20 pour chaque chemise 13, 14. Cette forme d'exécution n'est bien entendu pas limitative ; on pourra par exemple prévoir des résistances, des circuits internes de circulation d'un gaz, des moyens de convection, etc.

Par ailleurs, quelle que soit leur forme d'exécution, les moyens intrinsèques et ambivalents de transfert thermique de la chemise 13, 14, c'est-à-dire en l'espèce les circuits 19, 20 pourront avantageusement être indépendants de ceux 17, 18 de la coquille 11, 12. Cette indépendance permet une régulation plus fine du gradient, non seulement dans le temps mais également dans l'espace autour de la cavité de moulage 7, de la température de la paroi de la cavité de moulage 7 formée par les faces utiles 9, 10 des coquilles 11, 12 et les faces internes 15, 16 des chemises 13, 14, en configuration de fermeture du moule.

Chaque coquille 11, 12 comporte deux parties :
- une embase 21, 22 et
- un insert amovible 23, 24 rapporté sur l'embase 21, 22 et portant la face utile 9, 10.

L'embase 21, 22 reçoit la totalité des moyens de transfert thermique de ladite coquille11, 12, c'est-à-dire l'ensemble du circuit 17, 18. L'insert 23, 24 est donc dépourvu de tout moyen intrinsèque de transfert thermique et est ainsi exclusivement régulé thermiquement par transfert thermique avec l'embase 21, 22.

Chaque insert 23, 24 présente une forme de chapeau et coiffe, grâce à cette forme, une partie de tête 25, 26 de l'embase 21, 22, à l'exclusion de la partie de pied de cette embase.

Les moyens de transfert thermique de l'embase que constitue le circuit 17, 18 affectent la partie de tête 25, 26 de l'embase coiffée par l'insert en chapeau 23, 24.

Dans l'exemple illustré, l'embase 21, 22 comporte elle-même deux parties : un socle 27, 28 et un couvercle ou capuchon 29, 30 coiffant une portion de tête 31, 32 de diamètre réduit du socle 27, 28. Cette portion de tête 31, 32 présente à son extrémité un décrochement 33, 34 définissant avec le couvercle 29, 30 le circuit 17, 18 de circulation du fluide caloporteur, de forme annulaire d'axe A.

Un canal d'alimentation 39, 40 est ménagé dans le socle 27, 28 suivant l'axe A. Ce canal débouche dans le circuit annulaire 17, 18 et possède une entrée 41, 42 apte à recevoir un raccord (non représenté) équipant l'extrémité d'un conduit d'alimentation (non représenté) en fluide chaud ou froid. De même, un canal de retour (non visible) est ménagé dans le socle 27, 28 pour permettre l'évacuation du fluide après échange thermique.

La chemise 13, 14 possède une gorge annulaire 35, 36 ménagée en renfoncement d'une face externe cylindrique d'axe A de la chemise 13, 14. Cette gorge est fermée par un voile tubulaire 37, 38 emmanché sur la face externe de la chemise 13, 14 pour former le circuit 19, 20 de circulation du fluide caloporteur, de forme annulaire d'axe A.

## Revendications

1. Demi-bloc de moule pour le moulage par injection d'une lentille optique en matière thermoplastique, possédant au moins une empreinte de moulage (3, 4) délimitée transversalement par la face utile (9, 10) d'une coquille (11, 12) pourvue de moyens intrinsèques et ambivalents de transfert thermique (17, 18), cette coquille comportant une embase (21, 22) recevant la totalité des moyens de transfert thermique (17, 18) de ladite coquille et un insert amovible (23, 24) rapporté sur l'embase et portant la face utile (9, 10), ledit insert étant dépourvu de tout moyen Intrinsèque de transfert thermique et étant exclusivement régulé thermiquement par transfert thermique avec ladite embase, ledit Insert (23, 24) étant en forme de chapeau et coiffant une partie de tête (25. 26) au moins de l'embase (21, 22), **caractérisé en ce que** les moyens de transfert thermique (17, 18) de l'embase (21. 22) affectent la partie de tête (25, 26) de l'embase coiffée par l'insert.

2. Demi-bloc de moule selon la revendication 1, dans lequel la coquille (11, 12) est reçue dans une chemise (13, 14) qui présente une face interne cylindrique (15, 16) délimitant latéralement l'empreinte (3, 4) en complément de la face utile (9, 10) de la coquille (11, 12) et qui est pourvue de moyens intrinsèques et ambivalents de transfert thermique (19, 20).

3. Demi-bloc de moule selon la revendication 2, dans lequel les moyens intrinsèques et ambivalents de transfert thermique (19, 20) de la chemise (13, 14) sont indépendants de ceux (17, 18) de la coquille (11, 12).

4. Demi-bloc de moule selon l'une des revendications 2 ou 3, dans lequel les moyens intrinsèques et ambivalents de transfert thermique (17, 18, 19, 20) de la coquille (11, 12) et de la chemise (13, 14) comportent un circuit interne de circulation d'un fluide caloporteur.

5. Demi-bloc de moule selon l'une des revendications 1 à 4, dans lequel l'embase (22, 23) comporte elle-même deux parties : un socle (27, 28) et un couvercle (29, 30) coiffant la partie de tête (31, 32) du socle (27, 28), cette partie de tête présentant un décrochement (33, 34) définissant avec le couvercle (29, 30) le circuit (17, 18) de circulation du fluide caloporteur de ladite embase.

6. Demi-bloc de moule selon la revendication 4, dans lequel la chemise (13, 14) possède une gorge annulaire (35, 36) fermée par un voile tubulaire (37, 38) pour former le circuit (19, 20) de circulation du fluide caloporteur de ladite chemise.

7. Moule pour le moulage par injection d'une lentille optique en matière thermoplastique, comportant au moins un demi-bloc selon l'une des revendications précédentes.

8. Moule pour le moulage par injection d'une lentille optique en matière thermoplastique, comportant deux demi-blocs selon l'une des revendications 1 à 6, mobiles l'un par rapport à l'autre entre une configuration d'ouverture et une configuration de fermeture dans laquelle les deux demi-blocs sont en contact par des faces de jonction suivant un plan de joint transversal (J) et dans laquelle les empreintes se complètent par paire(s) pour former la ou les cavités de moulage souhaitée.

## Claims

1. A mould half-block for injection moulding an optical lens out of thermoplastic material, the half-block possessing at least one mould recess (3, 4) defined transversely by the working face (9, 10) of a shell (11, 12) provided with heat-transfer means (17, 18) that are intrinsic and both-way, said shell including a base (21, 22) receiving all of the heat-transfer means (17, 18) of said shell and a removable insert (23, 24) fitted on the base and carrying the working face (9, 10), said insert having no intrinsic heat-transfer means and being thermally regulated solely by heat transfer with said base, said insert (23, 24) being cap-shaped and fitting over a head portion (25, 26) of at least the base (21, 22), **characterised in that** the heat-transfer means (17, 18) of the base (21, 22) are allocated to the head portion (25, 26) of the base that is covered by the insert.

2. A mould half-block according to claim 1, in which the shell (11, 12) is received in a jacket (13, 14) having a cylindrical inside face (15, 16) defining the sides of the recess (3, 4) in addition to the working face (9, 10) of the shell (11, 12), and provided with heat-transfer means (19, 20) that are intrinsic and both-way.

3. A mould half-block according to claim 2, in which the intrinsic and both-way heat-transfer means (19, 20) of the jacket (13, 14) are independent of those (17, 18) of the shell (11, 12).

4. A mould half-block according to either of claims 2 and 3, in which the intrinsic and both-way heat-transfer means (17, 18, 19, 20) of the shell (11, 12) and of the jacket (13,14) comprise respective internal circuits for circulating a heat-conveying fluid.

5. A mould half-block according to any of claims 1 to 4, in which the base (22, 23) itself comprises two portions: a plinth (27, 28) and a lid (29, 30) covering the head portion (31, 32) of the plinth (27, 28), said head portion presenting a step (33, 34) co-operating with the lid (29, 30) to define the circuit (17, 18) of said base for circulating the heat-conveying fluid.

6. A mould half-block according to claim 4, in which the jacket (13, 14) possesses an annular groove (35, 36) closed by a tubular web (37, 38) to form the circuit (19, 20) of said jacket for circulating the heat-conveying fluid.

7. A mould for injection moulding an optical lens out of thermoplastic material, the mould comprising at least one half-block according to any one of the preceding claims.

8. A mould for injection moulding an optical lens out of thermoplastic material, the mould comprising two half-blocks according to any one of claims 1 to 6, the blocks being movable relative to each other between an open configuration and a closed configuration in which the two half-blocks make contact via junction faces in a transverse join plane (J) and in which the recesses cooperate in pairs to form the desired mould cavity(ies).

## Patentansprüche

1. Werkzeugblockhälfte für das Spritzgießen einer optischen Linse aus thermoplastischem Material umfassend zumindest einen Formhohlraum (3, 4) transversal von der Arbeitsseite (9, 10) einer Kokille (11, 12) begrenzt, bereitgestellt mit intrinsisch und ambivalent wirkenden Wärmeübertragungseinrichtung (17, 18), wobei die Kokille umfasst, eine Basis, welche die Gesamtheit der Wärmeübertragungseinrichtung (17, 18) der Kokille aufnimmt, und einen die Arbeitsseite (9, 10) aufweisenden und bezogen auf die Basis herausnehmbaren Einsatz (23, 24), wobei der Einsatz ohne jede intrinsisch wirkende Wärmeübertragungseinrichtung vorgesehen ist und der Einsatz ausschließlich über Wärmeübertragung mit der Basis thermisch reguliert wird, wobei der Einsatz (23, 24) kappenförmig ist und zumindest einen Kopfabschnitt (25, 26) der Basis (21,22) bedeckt,
**dadurch gekennzeichnet dass**
die Wärmeübertragungseinrichtung (17, 18) der Basis (21, 22) den von dem Einsatz bedeckten Kopfabschnitt (25, 26) der Basis beaufschlagt.

2. Werkzeugblockhälfte gemäß Anspruch 1, wobei die Kokille (11, 12) in einer Ummantelung (13, 14) befindlich ist, welche eine zylindrische Innenseite aufweist, die den Hohlraum (3, 4), die Arbeitsseite (9, 10) der Kokille ergänzend, lateral begrenzt und die intrinsisch und ambivalent wirkenden Wärmeübertragungseinrichtung (19, 20) aufweist.

3. Werkzeugblockhälfte gemäß Anspruch 2, wobei die intrinsisch und ambivalent wirkenden Wärmeübertragungseinrichtung (19, 20) der Ummantelung (13, 14) unabhängig von jener (17, 18) der Kokille ist.

4. Werkzeugblockhälfte gemäß Anspruch 2 oder 3, wobei die intrinsisch und ambivalent wikenden Wärmeübertragungseinrichtungen (17, 18, 19, 20) der Kokille (11,12) und der Ummantelung (13, 14) einen internen Kreislauf eines Wämieträgerfluides aufweisen.

5. Werkzeugblockhälfte gemäß einem der Ansprüche 1 bis 4, wobei die Basis (22, 23) selbst zwei Abschnitte aufweist: einen Sockel (27, 28) und einen Deckel (29, 30), welche den Kopfabschnitt des Sockels (27, 28) überdeckt, wobei der Kopfabschnitt eine Aussparung (33, 34) aufweist, die mit dem Deckel (29, 30) den Kreislauf (17, 18) des Wärmeträgerfluides der Basis definiert.

6. Werkzeughlockhälfte gemäß Anspruch 4, wobei die Ummantelung (13, 14) eine ringförmige Vertiefung (35, 36) aufweist, welche durch eine röhrenförmige Abdeckung (37, 38) geschlossen wird, um den Kreislauf (17, 18) des Wärmeträgerfluides der Ummantelung auszubilden.

7. Form für das Spritzgießen einer optischen Linse aus thermoplastischem Material umfassend zumindest eine Werkzeugblockhälfte gemäß einem der vorangehenden Ansprüche.

8. Form für das Spritzgießen einer optischen Linse aus thermoplastischem Material umfassend zwei Werkzeugblockhälften gemäß einem der Ansprüche 1 bis 6, wobei die eine bezüglich der anderen beweglich ist, zwischen einer offenen Konfiguration und einer geschlossenen Konfiguration, wobei die zwei Werkzeugblockhälften über Kontakflächen entlang einer transversalen Kontaktebene (J) in Kontakt sind und wobei sich der/die Formhohlraum bzw. -räume paarweise vervollständigt/vervollständigen um den/die gewünschte(n) Gusshohlraum bzw. -räume auszubilden.
